# EUROPEAN PATENT SPECIFICATION

(11) **EP 4 382 286 B1**
(45) Date of publication and mention of the grant of the patent: **27.11.2024**
(21) Application number: 23209741.0
(22) Date of filing: 14.11.2023
(51) Int. Cl.: B29C 73/16, B60C 19/12, B29D 30/06

(54) **SEALANT COMPOSITION AND PNEUMATIC TIRE**
DICHTUNGSZUSAMMENSETZUNG UND LUFTREIFEN
COMPOSITION D'ÉTANCHÉITÉ ET PNEUMATIQUE

(30) Priority: 08.12.2022 JP 2022196403
(43) Date of publication of application: 12.06.2024
(73) Proprietor: Toyo Tire Corporation, Itami-shi, Hyogo 664-0847 (JP)
(72) Inventor: KIMURA, Takuya, Itami-shi, Hyogo 664-0847 (JP)
(74) Representative: Ricker, Mathias

(56) References cited:
- US-A1- 2016 032 215
- US-A1- 2018 223 083

## Description

### BACKGROUND OF THE INVENTION

### 1. Field of the Invention

The present invention relates to a sealant composition and also to a pneumatic tire using the same.

### 2. Description of Related Art

As a pneumatic tire with an anti-puncture function, a tire having a sealant layer placed on its inner surface is known. In a tire provided with a sealant layer, when a foreign object, such as a nail, penetrates the tread, and a through hole is formed, the sealant layer automatically closes the through hole to prevent air leakage from the tire. A sealant layer is formed, for example, using an application apparatus as described in JP2022-076890A, by ejecting a sealant composition from its nozzle and applying the same to the tire inner surface.

As such a sealant composition, for example, JP2011-529972A describes one containing an unsaturated diene elastomer, 30 phr to 90 phr of a hydrocarbon resin, 0 phr to 60 phr of a liquid plasticizer having a Tg below -20°C, and 0 to less than 30 phr of a filler.

A sealant composition comprising a solid rubber component, a hydrocarbon resin, a liquid plasticizer and silica in known from document US 2016/032215 A1.

### SUMMARY OF THE INVENTION

However, the sealant composition described in JP2011-529972A is highly viscous at the temperature of application and puts a load on the application apparatus, resulting in the need to lower the application speed. Thus, there is room for improvement in production efficiency (i.e., processability in the application step).

In order to improve the production efficiency, it is possible to incorporate a large amount of plasticizer to reduce the viscosity of the sealant composition. Such a low-viscosity-type sealant composition has an advantage in production efficiency. However, after the sealant composition is applied, when the tire is allowed to stand at room temperature or rotates at a high speed, the sealant layer is likely to undergo flow deformation, resulting in poor shape retention. Meanwhile, a high-viscosity-type sealant composition with a reduced amount of plasticizer has an advantage in sealant layer shape retention, but there is a problem with production efficiency. Therefore, it has been demanded to improve the production efficiency during application while ensuring sealant layer shape retention.

In view of the above points, an object of an embodiment of the invention is to provide a sealant composition that allows for improved production efficiency during application while ensuring sealant layer shape retention.

The invention encompasses the following embodiments.
[1] A sealant composition including, per 100 parts by mass of a solid rubber component containing a diene rubber, 95 to 150 parts by mass of a hydrocarbon resin, 20 to 100 parts by mass of a liquid plasticizer, and 20 to 80 parts by mass of silica.
[2] The sealant composition according to [1], further including 1 to 10 parts by mass of a silane coupling agent per 100 parts by mass of the solid rubber component.
[3] The sealant composition according to [1] or [2], in which the diene rubber is at least one member selected from the group consisting of natural rubber, synthetic polyisoprene, polybutadiene, an isoprene copolymer, and a butadiene copolymer.
[4] The sealant composition according to any one of [1] to [3], in which the liquid plasticizer is an oil and/or a liquid rubber.
[5] The sealant composition according to any one of [1] to [4], in which the content of a filler including the silica is 30 parts by mass or more per 100 parts by mass of the solid rubber component.
[6] A pneumatic tire including a sealant layer formed from the sealant composition according to any one of [1] to [5].

According to embodiments of the invention, it is possible to improve the production efficiency during application while ensuring sealant layer shape retention.

### BRIEF DESCRIPTION OF THE DRAWINGS

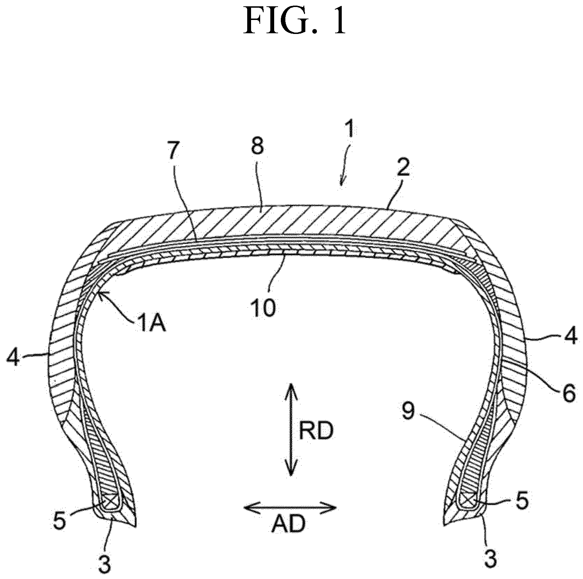

FIG. 1 is a cross-sectional view of a pneumatic tire according to one embodiment.

### DESCRIPTION OF EMBODIMENTS

A sealant composition according to this embodiment is a rubber composition that includes a solid rubber component containing a diene rubber, a hydrocarbon resin, a liquid plasticizer, and silica.

In this embodiment, the solid rubber component contains a diene rubber. The solid rubber component preferably contains a diene rubber as a main component. Thus, the diene rubber proportion in 100 mass% of the solid rubber component is preferably 50 mass% or more, more preferably 80 mass% or more, and still more preferably 90 mass% or more, and may also be 100 mass%. As used herein, "solid" refers to not having fluidity at 23°C.

A diene rubber refers to a rubber with a repeating unit corresponding to a diene monomer having a conjugated double bond. As diene rubbers for the solid rubber component, for example, natural rubber (NR), synthetic polyisoprene (isoprene rubber; IR), polybutadiene (butadiene rubber; BR), isoprene copolymers, butadiene copolymers, and the like can be mentioned. One of them may be used alone, and it is also possible to use two or more kinds together.

Here, an isoprene copolymer is a copolymer rubber of isoprene and other monomers, and, for example, styrene-isoprene copolymer rubber, butadiene-isoprene copolymer rubber, styrene-butadiene-isoprene copolymer rubber, and the like can be mentioned. A butadiene copolymer is a copolymer of butadiene and other monomers, and, for example, styrene-butadiene rubber (SBR), butadiene-isoprene copolymer rubber, styrene-butadiene-isoprene copolymer rubber, and the like can be mentioned. Incidentally, a copolymer rubber containing both isoprene and butadiene as monomers is included in the category of copolymers of the monomer whose molar proportion is higher. That is, when the molar proportion of isoprene is higher, such a copolymer is included in isoprene copolymers, while when the molar proportion of butadiene is higher, such a copolymer is included in butadiene copolymers.

The concept of the diene rubbers also encompasses those modified at the terminal or backbone as necessary and those modified to impart desired properties (e.g., modified NR).

In one embodiment, the solid rubber component may contain 20 to 80 mass% of natural rubber and/or polyisoprene and 20 to 80 mass% of polybutadiene; 30 to 70 mass% of natural rubber and/or polyisoprene and 30 to 70 mass% of polybutadiene; or 40 to 60 mass% of natural rubber and/or polyisoprene and 40 to 60 mass% of polybutadiene.

The solid rubber component may contain a solid rubber other than diene rubbers. As such non-diene rubbers, butyl rubber and the like can be mentioned, for example.

A hydrocarbon resin is a polymer based essentially on carbon and hydrogen. As a hydrocarbon resin, a solid thermoplastic resin having no fluidity at 23°C is preferably used. The hydrocarbon resin may be aliphatic, alicyclic, or aromatic, or may also be a combination of them, for example, an aliphatic/aromatic resin. The hydrocarbon resin may be a petroleum resin, or may also be a non-petroleum natural resin or synthetic resin.

As preferred examples of hydrocarbon resins, petroleum resins, styrene-based resins, and terpene-based resins can be mentioned. One of them may be used alone, and it is also possible to use two or more kinds together.

A petroleum resin is a resin obtained by polymerizing a petroleum fraction, and, for example, C5-based aliphatic petroleum resins, C9-based aromatic petroleum resins, and C5/C9-based aliphatic/aromatic copolymerized petroleum resins can be mentioned. One of them may be used alone, and it is also possible to use two or more kinds together. An aliphatic petroleum resin is a resin obtained by polymerizing a petroleum fraction equivalent to 4 to 5 carbon atoms (C5 fraction), and may be hydrogenated. An aromatic petroleum resin is a resin obtained by polymerizing a petroleum fraction equivalent to 8 to 10 carbon atoms (C9 fraction), and may be hydrogenated. An aliphatic/aromatic copolymerized petroleum resin is a resin obtained by copolymerizing a C5 fraction and a C9 fraction, and may be hydrogenated.

A styrene-based resin (styrene-based hydrocarbon resin) is a resin obtained by polymerizing a styrene-based monomer, such as styrene or its derivative (e.g., α-methylstyrene, vinyltoluene, 4-tert-butylstyrene, etc.), and may be a copolymer of a styrene-based monomer and other aromatic or aliphatic monomers. As styrene-based resins, for example, styrene/α-methylstyrene copolymers, α-methylstyrene homopolymers, styrene-based monomer/aliphatic monomer copolymers, α-methylstyrene/aliphatic monomer copolymers, styrene/α-methylstyrene/aliphatic monomer copolymers, and the like can be mentioned. One of them may be used alone, and it is also possible to use two or more kinds together.

A terpene-based resin (terpene-based hydrocarbon resin) is a resin obtained by polymerizing a terpene compound and has a unit derived from a terpene compound. As terpene compounds, for example, α-pinene, β-pinene, limonene, dipentene, and the like can be mentioned. Examples of terpene-based resins include a polyterpene resin obtained by polymerizing a terpene compound alone, as well as modified terpene resins obtained by polymerizing a terpene compound and a monomer other than terpene. One of them may be used alone, and it is also possible to use two or more kinds together. As a modified terpene resin, for example, an aromatic modified terpene resin obtained by polymerizing a terpene compound and an aromatic compound (e.g., terpene-phenol resin) can be mentioned.

The softening point of the hydrocarbon resin is not particularly limited, but is preferably 80 to 150°C, and more preferably 80 to 120°C. As used herein, the softening point is a value measured in accordance with ASTM D6090, and, in Examples, values measured using "DP70" (automated softening point measuring apparatuses) manufactured by METTLER TOLEDO were employed.

The hydrocarbon resin content is, per 100 parts by mass of the solid rubber component, 95 to 150 parts by mass, preferably 95 to 130 parts by mass, and more preferably 95 to 115 parts by mass. When the hydrocarbon resin content is 95 parts by mass or more, it becomes easier to reduce the viscosity during application and improve the application speed. When the hydrocarbon resin content is 150 parts by mass or less, cracks are less likely to occur in the sealant layer.

A liquid plasticizer refers to a plasticizer that is liquid at 23°C. That is, "liquid" means having fluidity at 23°C. As the liquid plasticizer, it is preferable to use an oil or a liquid rubber, and it is also possible to use an oil and a liquid rubber together.

As the oil, any of various oils that are generally incorporated into rubber compositions can be used, and, for example, mineral oils, vegetable oils, polyolefin oils, and the like can be mentioned. A specific example of a preferred oil is a mineral oil containing a hydrocarbon as a main component, and it is preferable to use at least one mineral oil selected from the group consisting of paraffinic oils, naphthenic oils, and aromatic oils, for example.

A liquid rubber is a rubber that is liquid at 23°C. As liquid rubbers, for example, liquid isoprene rubber, liquid butadiene rubber, liquid styrene butadiene rubber, liquid isoprene butadiene rubber, liquid isoprene styrene rubber, liquid isoprene butadiene styrene rubber, liquid isobutylene, liquid ethylene propylene diene rubber (EPDM), and the like can be mentioned. These liquid rubbers may be modified by carboxylation or methacrylation. One of these liquid rubbers may be used alone, and it is also possible to use two or more kinds together. As the liquid rubber, a liquid diene rubber is preferably used.

The weight average molecular weight (Mw) of the liquid rubber is not particularly limited, but is generally less than 100,000, and may be 1,000 to 80,000, or 2,000 to 60,000. Incidentally, a diene rubber in the solid rubber component generally has a weight average molecular weight (Mw) of 200,000 or more, and is distinguished from liquid rubbers.

As used herein, the weight average molecular weight (Mw) is a value measured by gel permeation chromatography (GPC). Specifically, for example, a differential refractive index detector (RI)-equipped "HLC8320-GPC" manufactured by Tosoh Corporation is used as the measuring apparatus, tetrahydrofuran (THF) is used as the solvent, and "TSKgel SuperHZM-M" manufactured by Tosoh Corporation is used as the column. Then, using a commercially available standard polystyrene, the polystyrene-equivalent weight average molecular weight is calculated at a measurement temperature of 40°C, a flow rate of 0.35 mL/min, a concentration of 1.0 g/L, and an injection volume of 40 µL.

The liquid plasticizer content is, per 100 parts by mass of the solid rubber component, 20 to 100 parts by mass, preferably 30 to 80 parts by mass, more preferably 35 to 80 parts by mass, and still more preferably 45 to 70 parts by mass. When the liquid plasticizer content is 20 parts by mass or more, it becomes easier to reduce the viscosity during application and improve the application speed, and sealing properties in the sealant layer can also be improved. Here, sealing properties refers to the ability to automatically close a through hole to prevent air leakage from the tire. When the liquid plasticizer content is 100 parts by mass or less, it becomes easier to ensure sealant layer shape retention.

In this embodiment, a predetermined amount of silica is incorporated as a filler. As a result of incorporating a predetermined amount of silica together with the hydrocarbon resin and liquid plasticizer described above, it is possible to improve the production efficiency during application while ensuring sealant layer shape retention.

As silica, for example, wet silica such as wet-precipitated silica or wet-gelled silica is preferably used.

The nitrogen adsorption specific surface area (N₂SA) of silica is not particularly limited, but is preferably 100 to 300 m²/g, more preferably 150 to 250 m²/g, and still more preferably 160 to 220 m²/g. Here, the nitrogen adsorption specific surface area of silica is a BET specific surface area measured in accordance with the BET Method described in JIS K6430:2008.

The silica content is, per 100 parts by mass of the solid rubber component, 20 to 80 parts by mass, preferably 25 to 70 parts by mass, and more preferably 30 to 60 parts by mass. When the silica content is 20 parts by mass or more, the sealant layer shape retention can be improved. When the silica content is 80 parts by mass or less, the fluidity during application can be improved to improve the production efficiency.

Silica alone may be the filler to be incorporated into the sealant composition, but it is also possible to incorporate other fillers such as carbon black together with silica. In that case, the content of fillers including silica is, per 100 parts by mass of the solid rubber component, preferably 30 parts by mass or more, more preferably 30 to 100 parts by mass, and still more preferably 40 to 80 parts by mass. In addition, the filler preferably contains silica as a main component, that is, it is preferable that 50 mass% or more, more preferably 55 mass% or more, of the filler content is silica.

Carbon black as an additional filler is not particularly limited, and known various species can be used. Specifically, SAF grade (N100 series), ISAF grade (N200 series), HAF grade (N300 series), FEF grade (N500 series), and GPF grade (N600 series) (all ASTM grades) can be mentioned. One of these grades of carbon black may be used alone, and it is also possible to use a combination of two or more kinds. As carbon black, one having a nitrogen adsorption specific surface area (N₂SA) of 40 to 150 m²/g is preferably used. Here, the nitrogen adsorption specific surface area of carbon black is measured in accordance with JIS K6217-2 (Method A):2017.

The carbon black content is not particularly limited and may be, per 100 parts by mass of the solid rubber component, 0 to 60 parts by mass, 5 to 50 parts by mass, 10 to 40 parts by mass, or 10 to 30 parts by mass.

It is preferable that the sealant composition further incorporates a silane coupling agent. As a result of incorporating a silane coupling agent, the sealant layer shape retention can be improved.

As silane coupling agents, for example, sulfide silane coupling agents such as bis(3-triethoxysilylpropyl)tetrasulfide, bis(3-triethoxysilylpropyl)disulfide, bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide, mercaptosilane coupling agents such as 3-mercaptopropyltrimethoxysilane, 3-mercaptopropyltriethoxysilane, 3-mercaptopropylmethyldimethoxysilane, 3-mercaptopropyldimethylmethoxysilane, and mercaptoethyltriethoxysilane, thioester group-containing silane coupling agents such as 3-octanoylthio-1-propyltriethoxysilane, 3-propionylthiopropyltrimethoxysilane, 3-hexanoylthio-1-propyltriethoxysilane, and 3-octanoylthio-1-propyltrimethoxysilane, and the like can be mentioned. One of them may be used alone, and it is also possible to use two or more kinds together.

The silane coupling agent content is, per 100 parts by mass of the solid rubber component, 1 to 10 parts by mass, more preferably 1.5 to 8 parts by mass, and still more preferably 2 to 6 parts by mass. In addition, the silane coupling agent content per 100 parts by mass of silica is preferably 2 to 25 parts by mass, more preferably 5 to 20 parts by mass, and still more preferably 5 to 15 parts by mass.

In addition to the above components, the sealant composition according to this embodiment may suitably incorporate various additives such as zinc oxide, stearic acid, processing aids, softeners, waxes, and anti-aging agents within the usual ranges. In one embodiment, the sealant composition is preferably free of crosslinking agents and vulcanization accelerators. Here, sulfur can be mentioned as a crosslinking agent. As vulcanization accelerators, various vulcanization accelerators such as sulfenamide-based, guanidine-based, thiuram-based, and thiazole-based vulcanization accelerators can be mentioned.

The sealant composition according to this embodiment can be produced by kneading in the usual manner using a kneading machine commonly used in the rubber industry. For example, in the first step, ingredients excluding a hydrocarbon resin are added to a solid rubber component and kneaded. Next, in the second step, a hydrocarbon resin is added and kneaded. As a result, a sealant composition is obtained.

In the first step, for example, a kneading machine such as a Banbury mixer, a roll mill, or a kneading extruder is used. In the first step, a liquid plasticizer is put into the kneading machine together with a solid rubber component, optionally followed by the addition of ingredients excluding a hydrocarbon resin, and kneading is performed while increasing the temperature of the kneaded product. The discharge temperature of the kneaded product from the kneading machine in the first step is not particularly limited and may be, for example, 120 to 160°C.

In the second step, for example, a kneading extruder such as a twin-screw kneading extruder or a co-kneader is used. In the second step, a hydrocarbon resin is put into the kneading extruder together with the kneaded product obtained in the first step, and kneaded. The discharge temperature of the kneaded product from the kneading machine in the second step is not particularly limited, but is preferably a temperature higher than the softening point of the hydrocarbon resin. As a result, the dispersibility of the hydrocarbon resin can be improved. The discharge temperature in the second step is preferably 80 to 160°C, and more preferably 100 to 160°C.

The sealant composition according to this embodiment can be used to form a sealant layer on the inner surface of a pneumatic tire. As pneumatic tires, pneumatic tires of various sizes for various uses, such as tires for passenger cars and heavy-duty tires for trucks, buses, and the like, can be mentioned.

One embodiment of a pneumatic tire having a sealant layer will be described using FIG. 1. The pneumatic tire 1 has an annular tread 2 that is in contact with the road surface, a pair of left and right bead parts 3,3 located on the inner side in the tire radial direction RD of the tread 2, and a pair of left and right side walls 4,4 located between the tread 2 and the bead parts 3,3. The tire 1 includes a bead core 5 embedded in each bead part 3, a carcass ply 6 toroidally extending between the left and right bead parts 3,3, a belt 7 and a tread rubber 8 provided on the outer circumferential side of the carcass ply 6 in the tread 2, an inner liner 9 provided on the tire inner surface side of the carcass ply 6, and a sealant layer 10 provided on the tire inner surface side of the inner liner 9.

The sealant layer 10 is provided on the inner surface 1A of the pneumatic tire 1, specifically over the inner side of the inner liner 9. In this example, the sealant layer 10 is provided on the tire inner surface 1A in the tread 2 from one end to the other end in the tire axial direction AD. Like this, the sealant layer 10 is preferably provided over the entire inner surface of the tread 2. The sealant layer 10 may be provided only on the inner surface of the tread 2, and may also be provided in a wider area including the inner surface of the tread 2. That is, it is preferable that the sealant layer 10 is provided on the inner surface 1A of the tire 1, including the inner surface of the tread 2.

The method for forming a sealant layer is not particularly limited, but it is favorable that the sealant composition is heated to a temperature higher than the softening point of the hydrocarbon resin (e.g., 80 to 160°C), and applied to the inner surface of a pneumatic tire using an application apparatus. Specifically, for example, it is possible that the sealant composition is ejected in the form of a band from the nozzle of the application apparatus, and applied along the tire circumferential direction while displacing the band relative to the tire inner surface in the tire axial direction. The sealant composition after application is left at room temperature, and, as a result, due to a decrease in its fluidity, the sealant composition settles on the inner surface of the pneumatic tire, forming a sealant layer.

The thickness of the sealant layer is not particularly limited and may be, for example, 3 to 7 mm.

### EXAMPLES

Examples will be shown hereinafter, but the invention is not limited to these examples.

Components used in the examples and comparative examples are as follows.
- IR: "IR2200" manufactured by JSR Corporation
- BR: "UBEPOL BR150B" manufactured by UBE Corporation
- Carbon black: N234, "SEAST 7HM" manufactured by Tokai Carbon Co., Ltd., N₂SA = 126 m²/g
- Silica 1: "Nipsil AQ" manufactured by Tosoh Silica Corporation, N₂SA = 205 m²/g
- Silica 2: "Ultrasil VN3" manufactured by Evonik Industries, N₂SA = 180 m²/g
- Silane coupling agent 1: Bis(3-triethoxysilylpropyl)disulfide, "Si75" manufactured by Evonik Industries
- Silane coupling agent 2: 3-Octanoylthio-1-propyltriethoxysilane, "NXT" manufactured by Momentive Performance Materials
- Liquid plasticizer 1: Process oil, "Process NC140" manufactured by ENEOS Corporation
- Liquid plasticizer 2: Liquid polyisoprene rubber, "KURAPRENE LIR-50" manufactured by Kuraray Co., Ltd.
- Hydrocarbon resin: "Petrotac 90" manufactured by Tosoh Corporation, aliphatic/aromatic copolymerized petroleum resin, softening point = 95°C, weight average molecular weight (Mw) = 1,600, Mw/Mn = 1.8
- Zinc oxide: "Zinc Oxide, Type 2" manufactured by Mitsui Mining & Smelting Co., Ltd.
- Stearic acid: "LUNAC S-20" manufactured by Kao Corporation
- Sulfur: "Powder Sulfur" manufactured by Tsurumi Chemical Industry Co., Ltd.
- Vulcanization accelerator 1: "SOXINOL D-G" manufactured by Sumitomo Chemical Co., Ltd., guanidine-based vulcanization accelerator
- Vulcanization accelerator 2: "SOXINOL CZ" manufactured by Sumitomo Chemical Co., Ltd., sulfenamide-based vulcanization accelerator

### [Examples 1 to 9, Comparative Examples 1 to 4]

Sealant compositions of Examples 1 to 9 and Comparative Examples 1 to 4 were prepared according to the formulations (parts by mass) shown in Table 1 below. Specifically, first, in the first step, components excluding a hydrocarbon resin and crosslinking ingredients (i.e., sulfur and vulcanization accelerator) were kneaded using a Banbury mixer (discharge temperature: 145°C). Next, in the second step, a hydrocarbon resin (as well as crosslinking ingredients in Comparative Example 2) was added to the kneaded product obtained in the first step and kneaded using a twin-screw kneading extruder (discharge temperature: 120°C), thereby giving a sealant composition.

With respect to each obtained sealant composition, the application speed was evaluated as production efficiency during application. At the same time, the sealant layer shape retention and sealing properties were also evaluated. The evaluation methods are as follows. Incidentally, when the sealant composition was unable to be ejected from the nozzle of the application apparatus, making it impossible to prepare a sealant layer, such a sealant composition was not evaluated for shape retention and sealing properties, and indicated by "-" in Table 1.

(1) Application Speed: Using a material application system manufactured by Nordson, a sealant composition was charged in the application apparatus and temperature-controlled at 140°C for 40 minutes. Subsequently, the time taken to discharge 1 kg of the sealant composition at a pressure of 4.0 × 10⁵ Pa was measured, and the amount of discharge per hour was calculated as the application speed. The result was expressed as an index taking the application speed of Comparative Example 1 as 100. The larger the index, the higher the application speed, indicating better efficiency of sealant layer production. Incidentally, when the sealant composition was unable to be ejected from the nozzle at the above pressure, "B" was given.
(2) Shape Retention: Using a material application system manufactured by Nordson, a sealant composition was applied to the inner surface of a pneumatic tire (tire size: 215/55R17) to form a 4-mm-thick sealant layer. The pneumatic tire provided with a sealant layer was laid out flat at room temperature and left for two weeks, and then the inner surface of the tire was observed to see whether the sealant layer had undergone flow deformation. When no flow deformation took place, "A" (good shape retention) was given, while when flow deformation took place, "B" (poor shape retention) was given.
(3) Sealing Properties: Using a pneumatic tire provided with a sealant layer prepared in the same manner as in the shape retention evaluation described above, the tire was mounted on a rim and filled with air at an internal pressure of 180 kPa. A nail (5.2 mm in diameter, 50 mm in length) was penetrated through the tread, and then the nail was pulled out. Based on whether air leakage occurred after pulling out the nail, sealing properties were evaluated.

**[Table 1]**

| | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Comp. Ex. 4 |
|---|---|---|---|---|---|---|---|---|---|---|---|---|---|
| Formulation (parts by mass) | | | | | | | | | | | | | |
| IR | 50 | 50 | 50 | 50 | 50 | 50 | 50 | 50 | 50 | 50 | 50 | 50 | 50 |
| BR | 50 | 50 | 50 | 50 | 50 | 50 | 50 | 50 | 50 | 50 | 50 | 50 | 50 |
| Carbon black | 20 | - | 20 | 20 | 20 | - | - | - | - | 40 | 40 | - | - |
| Silica 1 | 30 | 50 | 30 | - | 30 | 50 | 20 | 60 | 80 | - | - | 10 | 100 |
| Silica 2 | - | - | - | 30 | - | - | - | - | - | - | - | - | - |
| Silane coupling agent 1 | 2.4 | 4 | 2.4 | 2.4 | - | 4 | 1.6 | 4.8 | 6.4 | - | - | 0.8 | 8 |
| Silane coupling agent 2 | - | - | - | - | 2.4 | - | - | - | - | - | - | - | - |
| Liquid plasticizer 1 | 60 | 60 | - | 60 | - | 45 | - | - | 80 | 35 | 35 | 35 | 60 |
| Liquid plasticizer 2 | - | - | 60 | - | 60 | - | 20 | 100 | - | - | - | - | - |
| Hydrocarbon resin | 100 | 100 | 100 | 100 | 100 | 115 | 100 | 120 | 150 | 100 | 100 | 100 | 120 |
| Zinc oxide | - | - | - | - | - | - | - | - | - | - | 3 | - | - |
| Stearic acid | - | - | - | - | - | - | - | - | - | - | 3 | - | - |
| Sulfur | - | - | - | - | - | - | - | - | - | - | 0.5 | - | - |
| Vulcanization accelerator 1 | - | - | - | - | - | - | - | - | - | - | 1 | - | - |
| Vulcanization accelerator 2 | - | - | - | - | - | - | - | - | - | - | 1 | - | - |
| Evaluation | | | | | | | | | | | | | |
| Application speed (index) | 147 | 132 | 115 | 144 | 130 | 127 | 134 | 125 | 112 | 100 | B | 167 | 32 |
| Shape retention | A | A | A | A | A | A | A | A | A | B | - | B | A |
| Sealing properties | No leaks | No leaks | No leaks | No leaks | No leaks | No leaks | No leaks | No leaks | No leaks | No leaks | - | No leaks | Leakage occurred |

The results are as shown in Table 1. In Comparative Example 1, because sufficient amounts of liquid plasticizer and hydrocarbon resin were incorporated, the application speed was within an acceptable range, and sealing properties were present, but the shape retention was poor. Like this, although a low-viscosity-type sealant composition incorporating a large amount of liquid plasticizer is advantageous in production efficiency and sealing properties, the sealant layer shape retention tends to be poor.

In Comparative Example 2, for the purpose of improving the shape retention over Comparative Example 1, crosslinking with sulfur was introduced. In this case, the sealant composition lost fluidity during heating and temperature control in the application apparatus, and it was not possible to eject the sealant composition from the nozzle of the application apparatus. In the case of crosslinking with sulfur, in the second step of sealant composition preparation, sufficient heat cannot be applied during the short-time extrusion process, and the resulting sealant composition is in an uncrosslinked state. It is believed that in such an uncrosslinked sealant composition, a crosslinking reaction was accelerated during the subsequent heating and temperature control in the application apparatus, and the sealant composition lost fluidity and, as a result, was unable to be ejected from the nozzle.

In contrast, in Examples 1 to 9, because of the incorporation of a predetermined amount of silica in the solid rubber component together with predetermined amounts of hydrocarbon resin and liquid plasticizer, the application speed was high, the production efficiency was excellent, and also the shape retention and sealing properties were excellent. Although its mechanism is not clear, without intending to be limited thereby, this is believed to be due to the following reason: during application, fluidity that enables application through temperature control is maintained, while in the sealant layer after application, a fluidity suppressing effect is exhibited by the cohesion of silica.

In Comparative Example 3, the amount of silica incorporated was small, and, although the production efficiency was excellent, the sealant layer underwent flow deformation when left at room temperature, indicating poor shape retention. In Comparative Example 4, because the amount of silica incorporated was too large, although the sealant layer shape retention was excellent, the application speed was low, indicating poor production efficiency. In addition, air leakage occurred after nail removal, indicating poor sealing properties.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

### Reference Signs List

1: Pneumatic tire
2: Tread
3: Bead part
4: Side wall
5: Bead core
6: Carcass ply
7: Belt
8: Tread rubber
9: Inner liner
10: Sealant layer

## Claims

1. A sealant composition comprising, per 100 parts by mass of a solid rubber component containing a diene rubber:
95 to 150 parts by mass of a hydrocarbon resin;
20 to 100 parts by mass of a liquid plasticizer; and
20 to 80 parts by mass of silica.

2. The sealant composition according to claim 1, further comprising 1 to 10 parts by mass of a silane coupling agent per 100 parts by mass of the solid rubber component.

3. The sealant composition according to claim 2, wherein the silane coupling agent is at least one member selected from the group consisting of a sulfide silane coupling agent, a mercaptosilane coupling agent, and a thioester group-containing silane coupling agent.

4. The sealant composition according to any one of claims 1 to 3, wherein the diene rubber is at least one member selected from the group consisting of natural rubber, synthetic polyisoprene, polybutadiene, an isoprene copolymer, and a butadiene copolymer.

5. The sealant composition according to any one of claims 1 to 4, wherein the liquid plasticizer is an oil and/or a liquid rubber.

6. The sealant composition according to any one of claims 1 to 5, wherein the content of a filler including the silica is 30 parts by mass or more per 100 parts by mass of the solid rubber component.

7. The sealant composition according to any one of claims 1 to 6, wherein the hydrocarbon resin is at least one member selected from the group consisting of a petroleum resin, a styrene-based resin, and a terpene-based resin.

8. The sealant composition according to any one of claims 1 to 7, wherein the hydrocarbon resin has a softening point of 80 to 150°C.

9. The sealant composition according to any one of claims 1 to 8, wherein the silica has a nitrogen adsorption specific surface area (N₂SA) of 100 to 300 m²/g.

10. The sealant composition according to any one of claims 1 to 9, being free of crosslinking agents and vulcanization accelerators.

11. A pneumatic tire comprising a sealant layer formed from the sealant composition according to any one of claims 1 to 10.

## Patentansprüche

1. Dichtungszusammensetzung, welche pro 100 Massenteile einer festen Kautschuckomponente, die einen Dienkautschuk enthält, aufweist:
95 bis 150 Massenteile eines Kohlenwasserstoffharzes,
20 bis 100 Massenteile eines flüssigen Weichmachers, und
20 bis 80 Massenteile Siliziumdioxid.

2. Dichtungszusammensetzung nach Anspruch 1, welche ferner 1 bis 10 Massenteile eines Silan-Haftvermittlers pro 100 Massenteile der festen Kautschukkomponente aufweist.

3. Dichtungszusammensetzung nach Anspruch 2, wobei das Silan-Haftmittel mindestens ein Mitglied ist, das aus der Gruppe ausgewählt worden ist, die einen Sulfidsilan-Haftvermittler, einen Mercaptosilan-Haftvermittler und einen Thioestergruppen enthaltenden Silan-Haftvermittler umfasst.

4. Dichtungszusammensetzung nach einem der Ansprüche 1 bis 3, wobei der Dienkautschuk mindestens eine Komponente ist, die aus der Gruppe ausgewählt worden ist, die einen Naturkautschuk, ein synthetisches Polyisopren, ein Polybutadien, ein Isoprencopolymer und ein Butadiencopolymer umfasst.

5. Dichtungszusammensetzung nach einem der Ansprüche 1 bis 4, wobei der flüssige Weichmacher ein Öl und/oder ein flüssiger Kautschuk ist.

6. Dichtungszusammensetzung nach einem der Ansprüche 1 bis 5, wobei der Gehalt eines Füllstoffs, einschließlich des Siliziumdioxids, 30 Massenteile oder mehr pro 100 Massenteile der festen Kautschukkomponente beträgt.

7. Dichtungszusammensetzung nach einem der Ansprüche 1 bis 6, wobei das Kohlenwasserstoffharz mindestens eine Komponente ist, die aus der Gruppe ausgewählt worden ist, die ein Petroleumharz, ein Harz auf Styrolbasis und ein Harz auf Terpenbasis umfasst.

8. Dichtungszusammensetzung nach einem der Ansprüche 1 bis 7, wobei das Kohlenwasserstoffharz einen Erweichungspunkt von 80 bis 150 °C aufweist.

9. Dichtungszusammensetzung nach einem der Ansprüche 1 bis 8, wobei das Siliziumdioxid eine spezifische Oberfläche der Stickstoffadsorption (N₂SA) von 100 bis 300 m²/g aufweist.

10. Dichtungszusammensetzung nach einem der Ansprüche 1 bis 9, welche frei von Vernetzungsmitteln und Vulkanisationsbeschleunigern ist.

11. Pneumatischer Reifen, der eine Dichtungsschicht aufweist, die aus der Dichtungszusammensetzung nach einem der Ansprüche 1 bis 10 gebildet worden ist.

## Revendications

1. Composition d'agent d'étanchéité comprenant, pour 100 parties en masse d'un composant de caoutchouc solide contenant un caoutchouc de type diène :
95 à 150 parties en masse d'une résine hydrocarbonée ;
20 à 100 parties en masse d'un plastifiant liquide ; et
20 à 80 parties en masse de silice.

2. Composition d'agent d'étanchéité selon la revendication 1, comprenant en outre 1 à 10 parties en masse d'un agent de couplage silane pour 100 parties en masse du composant de caoutchouc solide.

3. Composition d'agent d'étanchéité selon la revendication 2, dans laquelle l'agent de couplage silane est au moins un élément choisi parmi le groupe constitué d'un agent de couplage sulfure-silane, d'un agent de couplage mercaptosilane et d'un agent de couplage silane contenant un groupe thioester.

4. Composition d'agent d'étanchéité selon l'une quelconque des revendications 1 à 3, dans laquelle le caoutchouc de type diène est au moins un élément choisi parmi le groupe constitué de caoutchouc naturel, de polyisoprène synthétique, de polybutadiène, d'un copolymère d'isoprène et d'un copolymère de butadiène.

5. Composition d'agent d'étanchéité selon l'une quelconque des revendications 1 à 4, dans laquelle le plastifiant liquide est une huile et/ou un caoutchouc liquide.

6. Composition d'agent d'étanchéité selon l'une quelconque des revendications 1 à 5, dans laquelle la teneur en une charge comprenant la silice est de 30 parties en masse ou plus pour 100 parties en masse du composant de caoutchouc solide.

7. Composition d'agent d'étanchéité selon l'une quelconque des revendications 1 à 6, dans laquelle la résine hydrocarbonée est au moins un élément choisi parmi le groupe constitué d'une résine de pétrole, d'une résine à base de styrène et d'une résine à base de terpène.

8. Composition d'agent d'étanchéité selon l'une quelconque des revendications 1 à 7, dans laquelle la résine hydrocarbonée a un point de ramollissement de 80 à 150 °C.

9. Composition d'agent d'étanchéité selon l'une quelconque des revendications 1 à 8, dans laquelle la silice a une surface spécifique d'adsorption d'azote (N₂SA) de 100 à 300 m²/g.

10. Composition d'agent d'étanchéité selon l'une quelconque des revendications 1 à 9, exempte d'agents de réticulation et d'accélérateurs de vulcanisation.

11. Bandage pneumatique comprenant une couche d'agent d'étanchéité formée à partir de la composition d'agent d'étanchéité selon l'une quelconque des revendications 1 à 10.
